# EUROPEAN PATENT SPECIFICATION

(11) **EP 1 916 547 B1**
(45) Date of publication and mention of the grant of the patent: **31.03.2010**
(21) Application number: 07019733.0
(22) Date of filing: 09.10.2007
(51) Int. Cl.: G02B 5/08, B60R 1/08

(54) **Mirror and hydrophilic composite film having photo catalyst activity**
Spiegel und hydrophile Verbundschicht mit photokatalytischer Aktivität
Miroir et film composite hydrophilique ayant une activité photocatalytique

(30) Priority: 23.10.2006 JP 2006288141
(43) Date of publication of application: 30.04.2008
(73) Proprietor: ICHIKOH INDUSTRIES, LTD., Shinagawa-ku, Tokyo 141-8627 (JP)
(72) Inventor: Shibasaki, Hironori, Isehara-shi Kanagawa (JP); Morohashi, Shigeru, Isehara-shi Kanagawa (JP); Ubukata, Tsutomu, Isehara-shi Kanagawa (JP); Shimoyama, Akio, Isehara-shi Kanagawa (JP)
(74) Representative: Grünecker, Kinkeldey, Stockmair & Schwanhäusser Anwaltssozietät

(56) References cited:
- EP-A- 1 066 878
- EP-A- 1 099 671
- EP-A- 1 752 501
- WO-A-2005/111672
- JP-A- 2001 290 012

## Description

### BACKGROUND OF THE INVENTION

### 1. Field of the Invention

The present invention relates to the field of mirrors. More specifically, it relates to a green mirror having glare proof property and the hydrophilic property. Moreover, the present invention also relates to the field of a hydrophilic composite film having photo catalyst activity capable of providing such functions.

### 2. Description of the Related Art

Recently, development of a color mirror having an excellent glare proof property and design property, suitable for the application of the car outside mirror and inside mirror attracts the attention. For example, as such a color mirror, the official gazette of the Japanese Patent Application Laid Open No. 2006-151203 discloses an automobile mirror having glare proof property being restrained the reflectance of blue light by including Ag minute particles in a colored layer. European patent document EP-A1-109961 discloses a mirror having photocatalytic and hydrophilic layers combined with a transparent reflectance adjusting interference layer. Japanese patent document JP-A-2001 290012 discloses a mirror comprising a photocatalytic layer and a color layer comprising pigments. International patent document WO-A-2005 111675 furthermore discloses a mirror preventing glare from HID lamps and halogen lamps using Co/Ni alloy layers. However, in the technical field of the automobile mirrors, a mirror having pollution preventive property as well as glare proof property, and furthermore, an excellent visibility is required.

### SUMMARY OF THE INVENTION

In order to respond to the demands as mentioned above, the present invention provides a green mirror having a controlled spectral reflection spectrum of a mirror comprising a photo catalyst titanium oxide layer, having both glare proof property and pollution preventive property, and furthermore, an excellent visibility.

The present inventors have found out that reflection of the blue light can be restrained while maintaining the green tone, and moreover, an excellent glare proof property and visibility can be provided by controlling the lamination conditions at the time of laminating titanium oxide so as to complete the present invention.

That is, a mirror of the present invention according to claim 1. As an example of a mirror having such a configuration, a mirror having a reflection film formed on one side of a glass substrate, and a colored layer, a titanium oxide layer and a silicon oxide layer laminated successively on the other surface of the glass substrate can be presented. As another example, a mirror having a reflection film formed on one side of a glass substrate, and a colored layer, a titanium oxide layer and a silicon oxide layer laminated successively on the reflection film can be presented.

. As another example of a mirror having such a configuration, a mirror having a colored layer and a reflection film laminated on one side of a glass substrate, and a titanium oxide layer and a silicon oxide layer laminated on the other surface of the glass substrate can be presented.

Furthermore, as to the spectral reflection spectrum, it is preferable that a mirror of the present invention has a reflectance in the spectral reflectance valley presented in a short wavelength region (390 to 430 nm) of 25 to 55% with respect to the reflectance in the spectral reflectance peak and a reflectance in the spectral reflectance valley presented in a long wavelength region (650 to 690 nm) of 50 to 75% with respect to the reflectance in the spectral reflectance peak. Moreover, the thickness of the titanium oxide layer is preferably about 150 to 190 nm.

The mirror of the present invention can be produced by a step of providing a colored layer on a glass substrate or a reflection layer formed on a glass substrate, and a step of successively laminating a titanium oxide layer and a silicon oxide layer on the colored layer or the opposite surface of the glass substrate with the colored layer formed. More specifically, the colored layer can be formed by spin coating a solution including a silicon containing compound, an inorganic pigment and as needed a solvent, and heating. Moreover, the titanium oxide layer and the silicon oxide layer can be formed by vacuum deposition or sputtering of the titanium oxide and the silicon oxide. The mirror of the present invention has preferable characteristics for the automobile use, and it can be used widely for common applications without limitation to the automobile use.

Furthermore, it is preferable that the mirror of the present invention includes a composite film for improving the visibility by providing glare proof property and the pollution preventive property, wherein the composite film is a hydrophilic composite film having a photo catalyst activity with a colored layer, a titanium oxide layer and a silicon oxide layer laminated successively on the surface of a substrate. Such a hydrophilic composite film having a photo catalyst activity can be used not only for the application of the automobile mirror but also for an automobile window pane, a lens for a lamp, a glass for construction materials, or the like.

### BRIEF DESCRIPTION OF THE DRAWINGS

FIGS. 1A is a schematic cross-sectional view showing the structure of a mirror of the present invention.
FIGS. 1B is a schematic cross-sectional view showing the structure of a mirror of the present invention.
FIGS. 1C is a schematic cross-sectional view showing the structure of a mirror of the present invention.
FIG. 2 is a chart showing the spectral reflection spectrum to be the reference of a green mirror.
FIG. 3 is a chart showing the spectral reflection spectrum of a mirror of the present invention.
FIG. 4 is a chart showing the results of the X ray diffraction (XRD) of a titanium oxide layer in a mirror of the present invention.
FIG. 5 is a graph showing the relationship between the ultraviolet ray irradiation time and the contact angle of water droplets as an index of the photo catalyst activity of the mirror of the present invention.
FIG. 6 is a chart showing the spectral reflection spectrum of the mirror of the present invention.

### DESCRIPTION OF THE PREFERRED EMBODIMENTS

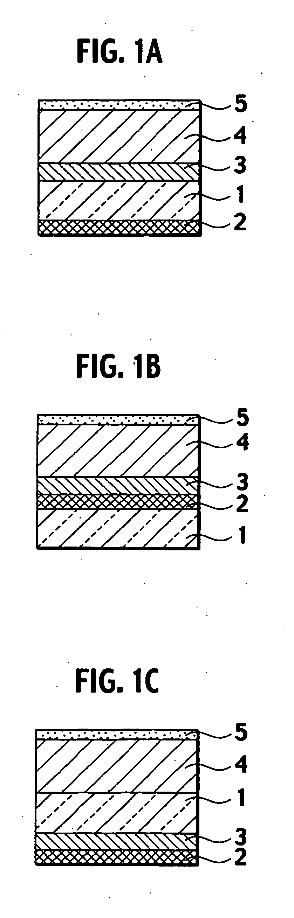

Hereafter, details of the present invention will be described. An embodiment of the mirror of the present invention has a green tone with the spectral reflectance peak of 490 to 540 nm, comprising a glass substrate, a reflection film, and a hydrophilic composite film having a photo catalyst activity with a colored layer, a titanium oxide layer and a silicon oxide laminated successively. Another embodiment of the mirror of the present invention comprises a glass substrate, a reflection film, a colored layer, and a laminated film with a titanium oxide layer and a silicon oxide layer laminated successively. Embodiments of the mirror of the present invention have the structures shown in FIGS. 1A to 1C.

FIG. 1A shows a mirror with a reflection film 2 on a glass substrate 1, and a colored layer 3, a titanium oxide layer 4, and a silicon oxide layer 5 laminated successively on the opposite surface of the glass substrate 1. Moreover, FIG. 1B shows a mirror with a reflection film 2, a colored layer 3, a titanium oxide layer 4 and a silicon oxide layer 5 laminated successively on one side of a glass substrate 1. Furthermore, FIG. 1C shows a mirror having a configuration with a colored layer 3 and a reflection film 2 laminated successively on one side of a glass substrate 1, and a titanium oxide layer 4 and a silicon oxide layer 5 laminated on the opposite surface of the glass substrate.

The mirror of the present invention is provided with the colored layer by applying a paint containing an inorganic pigment as the main component for providing a green tone to the mirror. The paint for forming the colored layer is representatively made of a metal oxide based inorganic pigment, a binder and a solvent. Various additives such as a dispersing agent may be added as needed.

As the inorganic pigment, a metal oxide as specified in claim 1 is used. As to the particle size of the primary particle of the inorganic pigment in an exemplary device, an inorganic pigment having a particle size of 0.5 µm or less may be used unless muddiness or cloudiness is generated in the colored layer in the case of use as a mirror. However, the primary particle size of the inorganic pigment is preferably as small as possible, and the particle size is preferably 0.7 µm or less, and more preferably 0.1 µm or less according to the invention. Moreover, since the particles of the inorganic pigment are aggregated with each other in general, they should be mixed and dispersed sufficiently so as not to generate the muddiness or the cloudiness in the case of use as a mirror.

As the inorganic pigment having a green mirror tone, for example, a cobalt pigment of (Co-Cr-Ni) oxide can be used. A commercially available product such as Cobalt Green 2024 (produced by Asahi Kasei Kogyo, average primary particle size 0.1 µm or less) may be used as well in an examplary device. According to the invention, a cobalt pigment of (Co-Ni-Zn-Ti) oxide is used.

An inorganic pigment is used mainly in the present invention for preventing discoloration and fading, and generation of peel-off of the film of the colored layer due to the oxidation decomposition of the pigment by the photo catalyst effect by the ultraviolet ray irradiation after forming film of the titanium oxide layer and the silicon oxide layer on the surface of the colored layer. As an auxiliary pigment, a small amount of an organic pigment such as phthalocyanine blue and phthalocyanine green may be used as well.

A binder is used as the film formable component in the paint for forming the colored layer. It is preferably that the material to be used as the binder includes a substance showing the inorganic matter-like nature after curing by heat, for preventing generation of peel-off of the film of the colored layer by the degeneration of the substance after forming film of the titanium oxide layer and the silicon oxide layer on the surface of the colored layer. As such a substance, unmodified alkyl silicone resin represented by dimethyl silicone resin, modified silicone resin such as polyester, epoxy, and acrylic, or di-, tri-, or tetraalkoxy silicate compound, or water glass can be used. For improving the film hardness of the colored layer, it is effective to use a mixture of the above-mentioned silicone resin and the above-mentioned alkoxy silicate compound having 1 to 10 carbon atoms. The binder such as the silicone resin plays a role as the binder component for contributing to dispersion solidification of the pigment and the adhesion to the surface of the supporting member such as the glass substrate.

The paint for forming the colored layer can be prepared by sufficiently mixing the above-mentioned inorganic pigment and binder to disperse the inorganic pigment in the binder homogeneously. At the time of the preparation, additives such as a diluting agent and a dispersing agent may be added. As to the mixing ratio of the inorganic pigment and the binder, the inorganic pigment is provided in a range of 20 to 80% by weight, preferably 45 to 60% by weight with respect to the total amount of the inorganic pigment and the binder. If the composition ratio of the inorganic pigment is 20% by weight or less, only light tone would be obtained even in the case the film thickness of the colored layer is thick. On the other hand, if the composition ratio of the inorganic pigment is 80% by weight or more, the pigment may be dropped off or the adhesion property may be lowered after forming film.

An organic solvent compatible with the binder may be used as the diluting agent, and its use amount may be adjusted optionally according to the dispersing method or the coating method. As an example of the usable diluting agent, alcohol, ester, ketone and aromatic hydrocarbon such as toluene or xylene can be presented. Moreover, as the dispersing agent, one to be decomposed at the time of baking the coating film so as not to provide a component of the coating film is preferable. For example, a commercially available carboxylic acid based or amino group modified resin dispersing agent can be used.

Moreover, as needed, various kinds of additives may be added to the paint for forming the colored layer. For example, various kinds of additives such as a leveling agent and an antifoaming agent for providing suitable paint characteristics, and a photo stabilizing agent, an antioxidant, a heat stabilizing agent, an ultraviolet absorber, and an ultraviolet stabilizer or the like may be added for providing desirable performance to the colored layer to be obtained after baking.

Mixing and dispersion of the paint may be carried out by a known method. In general, a bead mill, a ball mill, a sand mill, a three-bar roll, a paint shaker, or the like can be used. The colored layer can be formed by forming a paint layer by applying a paint prepared as mentioned above onto the surface of the supporting member such as the glass substrate, and subsequently drying and baking the paint layer.

Specifically, painting can be carried out by a known method such as a spin coating method, a spray method, a flow coat method, a dip method, and a reverse coat method. Drying and baking operation is carried out in the heating conditions of 300°C or higher and 15 minutes or more. For improving the film hardness of the colored layer, drying and baking at a high temperature is needed. For achieving the film hardness equivalent to the glass substrate, drying and baking should be carried out at 600 to 800°C for 3 minutes or more.

The colored layer obtained as mentioned above should have an appropriate tone for achieving a preferable glare proof property after providing the reflection film to be described later. More specifically, the green mirror to be the reference should have the spectral characteristics of the spectral reflectance peak of 490 to 540 nm, preferably 510 to 525 nm wavelength. The green tone having such a spectral reflectance peak is a tone that may be generally preferred as well as a blue color. Therefore, by the use of a mirror having such a green tone for the rearview mirror, or the like, the design property of the automobile can be improved.

Optically, since the visual sensitivity of the mankind is shifted to the short wavelength side at night (it is called as the "Purkinje shift"), blue light is sensed easily on the shorter wavelength side of the above-mentioned peak wavelength. The "Purkinje shift" is a phenomenon of having the peak wavelength in the dark view (night time) of 510 nm (blue) while the peak wavelength in the bright view (day time) is 555 nm (yellowish green) so as to have the visual sensitivity in the dark place shifted to the blue direction. That is, in general, according to the "Purkinje shift", light beam including the strong blue light component such as that of a discharge head lamp is easily sensed as glaring. However, accordingtothegreenmirror, since the spectral reflectance of the wavelength of 490 nm or less (blue light wavelength region) is lowered drastically, reflection of the blue light can be alleviated so that the glare proof effect can be obtained.

On the other hand, on the longer wavelength side of the above-mentioned peak wavelength, yellowish green, yellow and red lights can easily be sensed. The yellowish green and yellow reflection lights are not only of the light wavelength region of sensing glaring but also in many cases they tend to be problematic in terms of color by providing red reflection light. A back mirror with such tone thus has a lower glare proof property and design property. However, according to the green mirror, since the spectral reflectance of the wavelength of 540 nm or more can be reduced, the above-mentioned problem can be solved. That is, the green mirror can perform the glare proof effect also with respect to a light having a yellow to orange light source such as a halogen lamp.

Moreover, the reflectance of the green mirror to be the standard with respect to the total visible light region is 38 to 55%, and preferably it is 38% to 50%. If the reflectance is 38% or less, the visibility is lowered, and if it is more than 55% or more, the glare proof property is lowered.

It is also preferable that the filmthickness of the colored layer is set in view of the reflectance and the tone. In general, it is 0.1 to 5 µm, more preferably about 0.5 to 1.5 µm.

The reflection film of the mirror of the present invention can be produced from known materials. It can be formed for example using metal such as Al, Cr, Ti, Ag and Au or an alloy thereof according to the desired reflectance, and forming a film according to a known method such as deposition and sputtering. For example, in the case the reflection film is an Al deposition film, a mirror with a high reflectance can be obtained. On the other hand, in the case the reflection film is a Cr deposition film, the reflectance is lower than that of Al, which provides a preferable reflection film in the case the glare proof effect is required.

According to the mirror of the present invention, for providing the photo catalyst activity performance, a titanium oxide layer is provided. However, the reference green tone change derived from the colored layer should not be generated by the formation of the titanium oxide layer. Therefore, the titanium oxide layer to be formed by the present invention is as follows.

The titanium oxide layer can be produced by the so-called PVD method such as the vacuum deposition, the sputtering method and the ion plating method. The case of the vacuum deposition will be described specifically. First, titanium oxide to be the deposition material and a substrate are set in a vacuum deposition device. Then, the vacuum environment is prepared by reducing the pressure in the vacuum vessel in the device to about 6.6 × 10⁻⁴ to 6.7 × 10⁻² Pa, and at the same time heating the substrate to about 280 to 500°C, preferably 280 to 400°C. Then, while confirming the vacuum pressure meter, oxygen gas is introduced via a mass flow controller (MFC) so as to have the pressure in the vacuum vessel to about 6.6 × 10⁻³ to 6.7 × 10⁻² Pa. Then, a titanium oxide layer is formed on the substrate by heating the titanium oxide by directing electron beam to it, and opening a shutter for starting the deposition. The deposition film thickness is monitored with a device such as an optical film thickness meter or a crystal film thickness meter and is adjusted by closing the shutter when a predetermined film thickness is obtained. The deposition rate is preferably about 0.2 to 0.7 nm/sec.

The titanium oxide layer obtained by the film formation is preferably anatase type titanium oxide having an excellent photo catalyst property. This can be confirmed by for example presence of a peak form the (101) plane to be appeared at 2θ = 25.3° by the X ray diffraction. The film thickness of the titaniumoxide layer is preferably 70 to 200 nm. In consideration of the tone, it is preferably 150 to 190 nm, and more preferably 160 to 190 nm.

According to the mirror of the present invention, a silicon oxide layer is provided on the titanium oxide layer for providing the hydrophilic property and improving the mechanical strength. Like the formation of the titanium oxide layer mentioned above, by using silicon oxide instead of the titanium oxide as the deposition material and depositing it on the titanium oxide layer, the silicon oxide layer can be formed. The film thickness of the silicon oxide layer is preferably about 2 to 50 nm. In consideration of the tone, it is preferably 2 to 30 nm. According to a mirror having such a silicon oxide layer on the surface, it is considered that the positive hole generated by the photo catalyst function of the titanium oxide layer as the lower layer is reacted with moisture so as to generate the hydroxyl radical for forming Si-OH, which is dramatically more stable than Ti-OH for enabling maintenance of the hydrophilic property over a long period. Moreover, the reflectance of the mirror can be lowered by adjusting the relationship with respect to the reflectance of the titanium oxide by increasing the film thickness of the silicon oxide layer in the laminated film of the titanium oxide and the silicon oxide layer.

The glass substrate used in the mirror of the present invention is not particularly limited. For example, a substrate made of a known glass material such as soda glass can be used. In the case of using a glass substrate made of soda glass and forming a titanium oxide layer on such a glass substrate, it is preferable to provide a barrier layer between the glass substrate and the titanium oxide layer. If the glass substrate made of soda glass is heated to a temperature of about 400°C or higher, the sodium ions in the glass may be diffused in the titanium oxide layer so as to form a NaₓTi_{y}O_{z} layer. Since such a layer functions as the re-coupling center of the electron-positive hole pairs, the photo catalyst activity of the titanium oxide layer may be deteriorated. In the present invention, the silicon oxide layer and the like may be used as the barrier layer.

The mirror of the present invention of the above-mentioned configuration has preferable characteristics for the automobile mirror such as glare proof property, the self cleaning property and the hydrophilic property, as well as an excellent design property with a green tone having the spectral reflectance peak of 490 to 540 nm in the reflection spectrum.

From the viewpoint of the glare proof property and the visibility, it is preferable that the mirror of the present invention has the reflectance with respect to the visible light region of 40 to 55%. Furthermore, in the spectral reflection spectrum, it is preferable that a mirror of the present invention has a reflectance in the spectral reflectance valley presented in a short wavelength region (390 to 430 nm) of 25 to 55% with respect to the reflectance in the spectral reflectance peak and a reflectance in the spectral reflectance valley presented in a long wavelength region (650 to 690 nm) of 50 to 75% with respect to the reflectance in the spectral reflectance peak. According to such reflection characteristics, the mirror having the same tone as the tone of the colored layer, in other words, one without the change of the spectral reflection spectrum even in the case of laminating the titanium oxide layer and the silicon oxide layer can be obtained.

The mirror of the present invention may have any of the above-mentioned mirror configurations, and it can be produced by successively laminating the glass substrate, colored layer, reflection film, titanium oxide layer and silicon oxide layer according to the structure of the mirror to be produced. Moreover, similarly, the hydrophilic composite film of the present invention can be produced by successively laminating the colored layer, titanium oxide layer and silicon oxide layer on the substrate surface. Details thereof are as described above.

### (Examples)

Next, the present invention will be described further specifically with reference to the examples, but the present invention is not limited by the following examples. The examples mentioned below are an example of the mirror having the structure shown in FIG. 1.

### (Example 1)

The example 1 relates to the production of a green mirror to be the reference. According to the following procedure, a green mirror having the structure of reflection film/glass substrate/colored layer was produced. First, 30 parts by mass of a cobalt pigment (primary particle size 0.04 µm) of (Co-Ni-Zn-Ti) oxide, 5 parts by mass of a dispersion auxiliary agent resin ("SOLSPERS 24000" PRODUCED BY LUBRIZOL Corp., product name), and 65 parts by mass of n-butanol were placed in a sand mill, then kneaded and dispersed at a 20 to 40°C temperature range for 6 hours so as to prepare a paste of light green color. Then, a paint was produced by kneading and dispersing a silicone resin prepared by mixing a solvent of 61.25 parts by mass of ethyl acetate and 61.25 parts by mass of toluene and 24.5 parts by mass (based on the solid component) of a silicone resin ("KR-9706" produced by Shin-Etsu Chemical Co., Ltd., product name), and 100 parts by mass of the above-mentioned prepared paste(the coating film component after drying and baking was silicone resin : inorganic pigment = 45w% : 55w%).

Then, a sol solution of the obtained paint was applied on the washed glass substrate surface by the spin coating method. A colored layer was produced by drying and baking the glass substrate at 680°C for 10 minutes for improving the film hardness after preliminary drying and baking at 300°C for 30 minutes in a heating furnace. The film thickness of the produced colored layer measured with a profilometer (ALFA STEP 500 produced by KLA-tencor Corp.) was 1.4 µm.

A green mirror having a structure of reflection film/glass substrate/colored layer was produced by forming a chromium coating film on the rear side of the above-mentioned glass substrate (glass surface not provided with the colored layer) according to the sputtering method, The reflectance of the obtained green mirror measured with a spectrophotometric reflectance meter (RM-5 produced by MURAKAMI COLOR RESEARCH LABORATORY CO., LTD.) was 42%. The reflectance in all visible light region of a mirror with a chromium coating film formed on transparent glass measured for comparison was 48%.

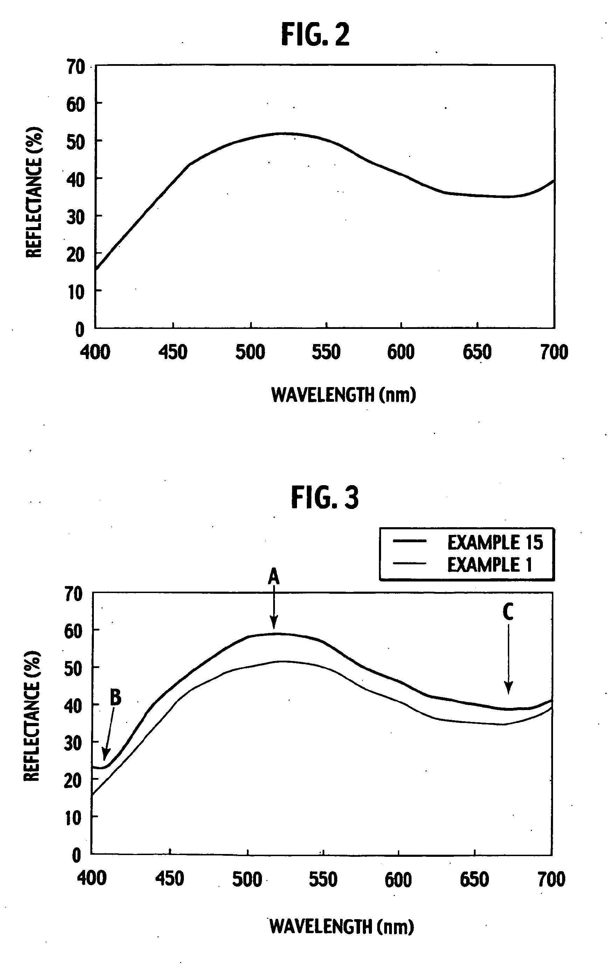

With regard to the green mirror produced as mentioned above, the spectral reflectance characteristics of the green mirror was measured with a spectral photometer (V-550 produced by JASCO Corp.). The measurement results are shown in FIG. 2. As shown in FIG. 2, a spectral reflectance spectrum of a moderate curve with the peak wavelength 520 nm of green color was obtained.

### (Examples 2 to 8)

A green mirror of the present invention which have a titanium oxide layer and a silicon oxide layer laminated can be produced basically by providing the colored layer of the mirror produced in the example 1 as the base layer and successively laminating a titanium oxide layer and a silicon oxide layer on the surface. The examples 2 to 8 are for discussing the influence of the composition ratio of the silicone resin and the inorganic pigment to provide the binder as the film formation conditions of the colored layer to provide the base layer. More specifically, the colored layer was formed with different mixing ratio of the silicone resin and the inorganic pigment as shown in Table 1, and the green mirror was produced in the same manner as in the example 1. Then, with regard to the obtained green mirror, the external appearance, the adhesion property, and the endurance such as the film hardness were evaluated. As the comparison reference, the endurance of the green mirror produced in the example 1 was evaluated in the same manner. The results are shown in Table 1.

As to the evaluation of the external appearance, one without defects of cloudiness, muddiness, breaking and crack by the visual observation was determined to be "OK".

The adhesion property was evaluated by the checkerboard test and the vapor test. In the checkerboard test, the colored layer was cross-cut by a 1 mm interval, a Cellotape (registered trademark) (NICHIBAN Co., Ltd.) was attached and pulled off strongly for evaluating by the number of those remaining on the mirror (colored layer) (checkerboard test: JIS K5400-8.5 item. Tape standard: JIS Z1522). On the other hand, in the vapor test, the mirror external appearance change was observed visually after leaving in the saturated vapor of 90°C for 5 hours.

As to the coating film hardness, presence of the flaw on the coating film surface was observed and evaluated after rubbing 10 times with KIMWIPES (registeredtrademark) S-200 (NIPPONPAPER CRECIA Co., LTD.) by a 250 g/cm² load.

The total evaluation was shown by integrating the various evaluation results based on the evaluation criteria of Good (G) : no problem in use, Fair (F): slight problems remaining at the time of use, and Poor (P): unusable.

**Table 1**

| Ex. | Silicone resin | Inorganic pigment | External appearance | Adhesion property | | Film hardness | Total evaluation |
|---|---|---|---|---|---|---|---|
| | | | | Checker Board test | Vapor test | | |
| | (w%) | (w%) | (Visual observation) | | (90T -5H) | (KIMWIPES: 250 g/cm²: 10 times) | |
| 1 | 45 | 55 | OK | 100/100 | OK | OK | G |
| 2 | 15 | 85 | OK | 77/100 | OK | Flaw | P |
| 3 | 20 | 80 | OK | 100/100 | OK | OK | G |
| 4 | 30 | 70 | OK | 100/100 | OK | OK | G |
| 5 | 50 | 50 | OK | 100/100 | OK | OK | G |
| 6 | 70 | 30 | OK | 100/100 | OK | OK | G |
| 7 | 80 | 20 | Faint color | 100/100 | OK | OK | G |
| 8 | 85 | 15 | Film crack | 95/100 | Film crack | OK | P |

According to Table 1, in the examples 2 and 3 with a large amount of the inorganic pigment, the inorganic pigment cannot be covered sufficiently with the silicone resin after the film formation so as to cause the tendency of the insufficient adhesion force and the film hardness decline. On the other hand, in the examples 7 and 8 with a small amount of the inorganic pigment, due to the large silicone resin volume shrinkage by the heat drying, baking process at the time of the film formation, cracking tends to be generated in the film by its stress. From the above-mentioned, the mixing ratio of the silicone resin and the inorganic pigment is preferably in a range of inorganic pigment 20 to 80w% : silicone resin 80 to 20w%.

### (Examples 9 to 14)

The examples 9 to 14 are for discussing the influence of the drying and baking temperature as the film formation conditions of the colored layer. More specifically, a green mirror was produced by forming a colored layer by carrying out the main drying and baking operation in the conditions shown in Table 2 after preliminary drying and baking at 300°C for 30 minutes in the same manner as in the example 1 for evaluating the external appearance, the adhesion property and the endurance such as the film hardness in the same manner as in the example 1. The results are shown in Table 2.

**Table 2**

| Ex. | Drying condition | External appearance | Adhesion property | | Film hardness | Total evaluation |
|---|---|---|---|---|---|---|
| | | | Checkerboard test | Vapor test | | |
| | (°C-minute) | (Visual observation) | | (90°C-5H) | (KIMWIPES: 250 g/cm²: 10 times) | |
| 9 | 300-10 | OK | 100/100 | OK | Slight flaw | F |
| 10 | 500-10 | OK | 100/100 | OK | OK | G |
| 11 | 600-10 | OK | 100/100 | OK | OK | G |
| 12 | 700-10 | OK | 100/100 | OK | OK | G |
| 13 | 800-10 | OK | 100/100 | OK | OK | G |
| 14 | 850-10 | Glass deformation | 100/100 | Film crack | OK | P |

According to Table 2, in the example 9 further with drying and baking for the 10 minutes at the same temperature after heating at 300°C for 10 minutes in the preliminary drying and baking, the adhesion force and the film hardness are in a state close to the use stage. Furthermore, in the examples 10 to 13 of a higher temperature, the film hardness tends to be higher. Moreover, it is also found that a temperature of 600°C or higher is needed for achieving the film hardness equivalent to the glass substrate. On the other hand, with a temperature higher than 800°C, thermal deformation of the glass substrate is brought about so that its use as the mirror may not be enabled. In consideration of the above, it is found that the temperature at the time of main drying and baking of the colored layer is preferably 600 to 800°C.

### (Example 15)

The example 15 is for discussing the laminated film in the green mirror having a laminated film of a titanium oxide layer and a silicon oxide layer (hereafter it is referred to as a "green laminated film mirror"). In the green mirror having the titanium oxide layer and the silicon oxide layer, for preventing change of the tone of the green mirror, the tone of the laminated film obtained by film formation of the titanium oxide layer and the silicon oxide layer should be close to green. The tone of the laminated film is determined mainly by the film thickness of the titanium oxide layer having a higher reflectance than that of the glass. The film thickness of the titanium oxide to have a green reflection light was specified by the optical film calculation. It was found out that the film thickness for obtaining a reflection light close to green by the photo interference effect by the titanium oxide film (reflectance (n) = 2.2 to 2.3) is 55 nm, 150 nm, and 270 nm.

Among the above-mentioned film thicknesses, the 150 nm film thickness is most appropriate. For sufficiently causing the photo catalyst function by the titanium oxide film, the anatase type crystals of the titanium oxide should be grown. A film thickness of 80 nm or more is needed for growing preferable anatase crystals. Moreover, if the film thickness of the titanium oxide is thicker, the basic green mirror tone cannot be obtained. Since the titanium oxide shows several reflection peaks in the visible light wavelength region (wavelength = 400 to 700 nm), different colors may be mixed in the green reflection light. Therefore, it is with the film thickness of about 150 nm that one spectral reflectance peak is obtained in the same visible light wavelength region as the green mirror spectral reflection characteristics.

### (Production of the green laminated film mirror)

Based on the above-mentioned knowledge, a green laminated film mirror was produced by successively laminating the titanium oxide layer and the silicon oxide layer on the colored layer of the green mirror produced in the example 1 as follows.

First, the green mirror produced in the example 1 set in a vacuum deposition device having an electron gun as the heat source, the vacuum vessel was discharged with a vacuum pump to 2.6 × 10⁻³ Pa. At the same time, the green mirror was heated to 330°C.

Next, the pressure in the vacuum vessel was adjusted to 2.6 × 10⁻² Pa by introducing oxygen gas into the vacuum vessel via a mass flow controller (MFC). The deposition materials of titanium oxide (TiO₂ and silicon oxide (SiO₂) (produced by CANON OPTRON Corp.) preliminarily placed in the deposition device, after directing an electron beam (EB) to the titanium oxide (TiO₂) and heating it, the deposition was started by opening the shutter, so a titanium oxide layer was formed. The film thickness at the time of deposition was monitored with an optical film thickness meter (OPM-6 produced by SYNCHRON Corp.) so that the deposition was finished at the 3λ/4 stage using a interference film of a 560 nm central wavelength. Moreover, as to the deposition rate, it was carried out at 0.5 nm/sec while monitoring with a crystal type film thickness meter (XTC).

An oxygen gas was introduced again via the MFC to the vacuum vessel for having the pressure in the vacuum vessel at 1.3 × 10⁻² Pa. Next, with the deposition material changed to the silicon oxide (SiO₂), after directing an electron beam (EB) and heating it, deposition was started by opening the shutter for forming a silicon oxide layer on the titanium oxide layer. Deposition was finished at the time the film thickness value at the time of the deposition was 20 nm based on the calculation of the light amount change of the optical film thickness meter. As mentioned above, a green laminated film mirror having a structure of reflection film/glass substrate/colored layer/titanium oxide layer/silicon oxide layer was obtained. The cross-sectional structure of the green laminated filmmirror was as shown in FIG. 1A. Hereafter, evaluation of the green laminated film mirror produced in the example 15 will be mentioned.

### (Spectral reflection characteristics)

The spectral reflection characteristics of the green laminated film mirror produced as mentioned above were discussed, and the reflectance with respect to the visible light region was 47%. The spectral reflection characteristics of the produced green laminated filmmirror are shown in FIG. 3 together with the spectral reflection characteristics of the reference green mirror produced in the example 1.

According to FIG. 3, in the green laminated film mirror produced in the example 15, there is a point of the spectral reflectance peak in the 490 to 540 nm wavelength region (point A in FIG. 3). In addition, there are a point of the spectral reflectance valley presented in the shorter wavelength region (390 to 430 nm) (point B in FIG. 3) and a point of the spectral reflectance valley presented in the longer wavelength region (650 to 690 nm) (point C in FIG. 3). On the other hand, the spectral reflection characteristics of the green mirror produced in the example 1 are as follows:
Point A (spectral reflectance peak) : 520 nm (reflectance = 59.3%)
Point B (shorter wavelength side valley): 400 nm (reflectance = 23.2%)
Point C (longer wavelength side valley): 670 nm (reflectance = 39.1%).
For ensuring the same tone for the green laminated film mirror of the example 15 as that of the green mirror of the example 1, the wavelengths (positions) of the A, B, C points in the green mirror of the example 1 in FIG. 3 and the reflection ratio thereof should be maintained to some extent. In the case of the green laminated film mirror of the example 15, B/A = 0.39 and C/A = 0.66 so that it is found to be in an appropriate range. As the appropriate range, B/A is 25 to 55%, and C/A is 50 to 75%.

### (Reflectance)

In the green laminated film mirror of the example 15, the film thickness and the reflectance (n) of the titanium oxide layer and the silicon oxide layer formed as the laminated film were measured with a monitor glass and an eripsometer (SD2303 produced by PHILIPS Corp.). The results are shown in Table 3.

**Table 3**

| | Film thickness (nm) | Reflectance (n) |
|---|---|---|
| Titanium oxide layer | 172 | 2.16 |
| Silicon oxide layer | 17 | 1.46 |

### (Crystalline property of the titanium oxide)

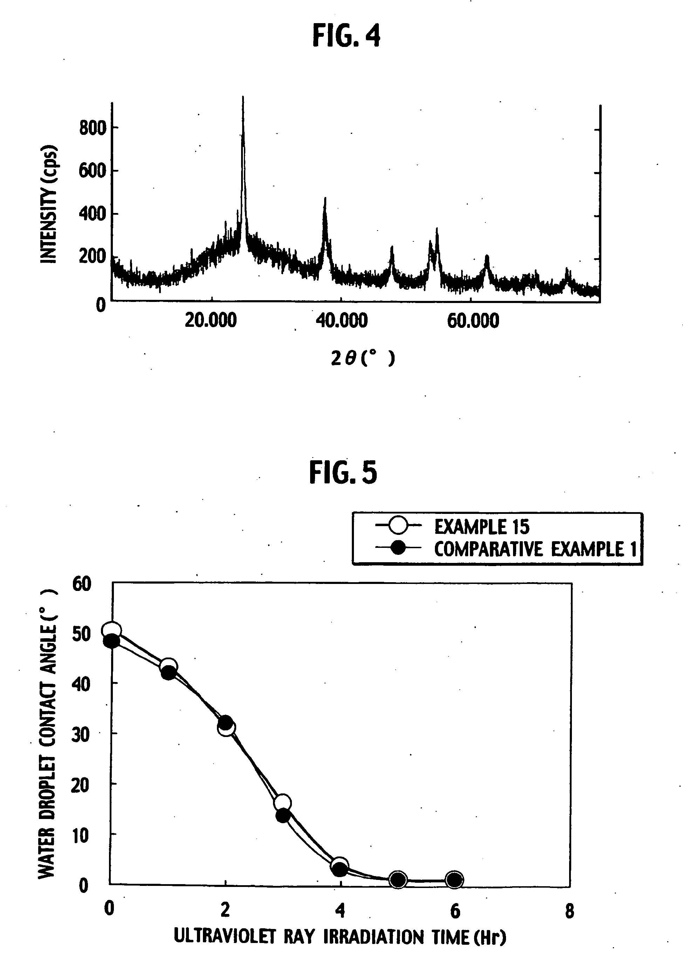

According to the analysis of the titanium oxide layer in the green laminated film mirror of the example 15 with an X ray diffraction device, it was confirmed to be an anatase type crystal. The XRD measurement results are shown in FIG. 4.

### (Photo catalyst property and hydrophilic performance)

A 0.1w% engine oil-dichloromethane solution was applied on the surface of the green laminated film mirror of the example 15 by the dipping method and dried. Thereafter, change of the water droplet contact angle of the mirror surface was observed by directing a ultraviolet ray (1 mw/cm²) using a black light (UVL-56 produced by FUNAKOSHI Corp.) on the mirror surface. A mirror produced in the same manner as in the example 15 except that the colored layer was not provided was prepared as the comparative example 1. That is, a chromiummirror provided with the hydrophilic film was produced by providing a laminated film of a titanium oxide layer and a silicon oxide layer on the glass substrate surface without presence of the colored layer for the evaluation as mentioned above. The results are shown in FIG. 5.

According to FIG. 5, the example 15 and the comparative example 1 show the same behavior so as to have the super hydrophilic property state with the water droplet contact angle of 5° or less by ultraviolet ray irradiation for 4 hours. Thereby, it is found that the colored layer in the green laminated film mirror as produced in the example 15 does not prevent the appearance of the photo catalyst activity of the titanium oxide. For the water droplet contact angle measurement, a contact angle meter (CA-X produced by Kyowa Interface Science CO., Ltd) was used.

### (Endurance)

Endurance was evaluated for the green laminated filmmirror of the example 15 and the chromium mirror produced as the comparative example 1. The results are shown in Table 4. As to the evaluation of the external appearance, one without defects of cloudiness, muddiness, breaking and crack by the visual observation was determined to be "OK". The adhesion property was discussed in the same manner as in the evaluation in the examples 2 to 8. Moreover, the film hardness was evaluated by the visual observation of the presence of the flaw after rubbing 10 times with STEEL WOOL: 0000 by a 250 g/cm² load instead of KIMWIPES (registered trademark) S-200 (NIPPON PAPER CRECIA Co. , LTD.) used in the examples 2 to 8.

**Table 4**

| | External appearance | Adhesion property | | Film hardness | Total evaluation |
|---|---|---|---|---|---|
| | | Checkerboard test | Vapor test | | |
| | (visual observation) | | (90°C-5h) | (steel wool :0000) 250 g/cm² :10 times) | |
| Example 15 | OK | 100/100 | OK | OK | G |
| Comparative example 1 | OK | 100/100 | OK | OK | G |

According to Table 4, it was found that the laminated film in the green laminated film mirror performs the strong adhesion force without declining of the coating film adhesion property or generation of crack in spite of carrying out the process for providing the photo catalyst property and the hydrophilic property by laminating the titanium oxide layer and the silicon oxide layer on the surface of the colored layer of the green mirror.

### (Examples 16 to 20)

The examples 16 to 20 are for discussing the influence of the titanium oxide layer on the spectral reflection characteristics of the green laminated film mirror. For determining the tone range at the time of forming the laminated film of the green laminated film mirror, a plurality of green laminated film mirrors with different titanium oxide layer film thicknesses were produced by changing the wavelength of the interference filter of the optical film thickness meter to be used at the time of depositing the titanium oxide layer. The deposition conditions other than the film thickness of the titanium oxide layer, and the deposition conditions and the film thickness of the silicon oxide layer were the same as those of the example 15. The spectral reflection spectrum of each of the produced green laminated film mirrors was measured and evaluated by observing the transition of the A, B, C points shown in FIG. 3 and the tone. The results are shown in Table 5 together with the evaluation of the green laminated film mirror of the example 15.

**Table 5**

| Ex. | Titanium oxide film thickness (nm) | Point A | | Point B | | Point C | | Mirror reflectance (%) |
|---|---|---|---|---|---|---|---|---|
| | | Wavelength (nm) | Reflectance (%) | Wavelength (nm) | Reflectance (%) | Wavelength (nm) | Reflectance (%) | |
| 15 | 172 | 520 | 59.3 | 400 | 23.2 | 670 | 39.1 | 47 |
| 16 | 155 | 486 | 61.9 | 380 | 21.2 | 640 | 38.2 | 44 |
| 17 | 163 | 498 | 60.6 | 390 | 22.3 | 660 | 39.0 | 46 |
| 18 | 179 | 526 | 59.1 | 410 | 27.8 | 670 | 44.0 | 48 |
| 19 | 186 | 537 | 58.6 | 420 | 32.4 | 680 | 44.1 | 51 |
| 20 | 194 | 546 | 58.8 | 440 | 35.1 | 690 | 43.4 | 50 |

According to Table 5, in the mirrors of the examples 16 and 17 with the film thickness of the titanium oxide layer thinner than that of the example 15, the wavelengths of the points A, B, C are in the shorter wavelength direction compared with the green laminated film mirror of the example 15. In the mirror of the example 16, the wavelength of the point A is in the blue range, and furthermore, the reflectance on the longer wavelength side of the point C is also high. Then, the tone of the green laminated film mirror has a blue tinge so that it cannot be called as a green laminated film mirror.

Moreover, in the mirrors of the examples 18, 19 and 20 with the film thickness of the titanium oxide layer thicker than that of the example 15, the wavelengths of the points A, B, C are in the longer wavelength direction compared with the green laminated film mirror of the example 15. Therefore, the tone of the green laminated film mirror has gradually stronger yellowish tinge so that the mirror of the example 20 shows yellowish green and it cannot be called as the same green tone as the example 15.

According to the results presented above, the film thickness range of the titanium oxide layer to be used for the green laminated film mirror is 150 to 190 nm, and preferably 165 to 180 nm.

### (Examples 21 to 24)

The examples 21 to 24 relates to the discussion for approximating the spectral reflection characteristics of the green laminated film mirror of the example 15 shown in FIG. 3 to the characteristics of the green mirror of the example 1 to be the reference.

More specifically, for approximating the spectral reflection characteristics of the green laminated film mirror on the shorter wavelength side of the point A in FIG. 3 to the characteristics of the green mirror of the example 1 to be the reference, the oxygen partial pressure at the time of depositing the titanium oxide was changed as shown in Table 6 by changing the pressure in the vacuum vessel at the time of the film formation of the titanium oxide layer.. The reflection characteristics of each obtained green laminated film mirror were evaluated by measuring the spectral reflection spectrum. In the production of each green laminated film mirror, the deposition conditions other than the oxygen partial pressure at the time of depositing the titanium oxide, the film thickness of the titanium oxide layer, the deposition conditions of the silicon oxide and the film thickness of the silicon oxide layer were the same as those of the example 15. The evaluation results of the reflection characteristics of each mirror are shown in Table 7 together with those of the mirror of the example 15.

**Table 6**

| Ex. | Pressure in the vacuum vessel (Pa) | MFC Flow Rate (sccm) | Pressure at the time of depositing the titanium oxide (Pa) | Reflectance (n) |
|---|---|---|---|---|
| 15 | 2.6 × 10⁻³ | 165 | 2.6 × 10⁻² | 2.16 |
| 21 | 4 × 10⁻³ | 195 | 2.6 × 10⁻² | 2.12 |
| 22 | 6.7 × 10⁻³ | 242 | 2.6 × 10⁻² | 2.09 |
| 23 | 1.3 × 10⁻³ | 123 | 2.6 × 10⁻² | 2.21 |
| 24 | 8 × 10⁻⁴ | 91 | 2.6 × 10⁻² | 2.27 |

**Table 7**

| Ex. | Point A | | Point B | | Point C | | Mirror reflectance (%) |
|---|---|---|---|---|---|---|---|
| | Wavelength (nm) | RefLectance (%) | Wavelength (nm) | RefLectance (%) | Wavelength (nm) | Reflectance (%) | |
| 15 | 520 | 59.3 | 400 | 23.2 | 670 | 39.1 | 47 |
| 21 | 520 | 58.1 | 400 | 28.4 | 680 | 41.0 | 48 |
| 22 | 520 | 57.5 | 400 | 32.3 | 670 | 41.3 | 47 |
| 23 | 520 | 59.1 | 410 | 27.8 | 670 | 36.7 | 48 |
| 24 | 510 | 59.8 | 400 | 17.8 | 680 | 34.9 | 48 |

According to Table 6, it is found that the refractive index of the titanium oxide is changed corresponding to the pressure in the vacuum vessel so that the refractive index tends to be higher with a lower pressure. On the other hand, according to Table 7, the reflectance of the mirror shows the substantially equal value in any case. The mirrors of the examples 23 and 24 having a high refractive index have a lower value of the point B/point A and point C/point A compared with that of the example 15. Moreover, since the reflectance of the point A is large, the green color is further emphasized. The reflectance of the green laminated film mirror obtained by laminating the titanium oxide layer and the silicon oxide layer on the green mirror with respect to the visible light region is preferably 40 to 55% in terms of the glare proof property, or the like. It is found that the green laminated film mirrors produced in the examples 21 to 24 satisfy the above-mentioned preferable range of the reflectance.

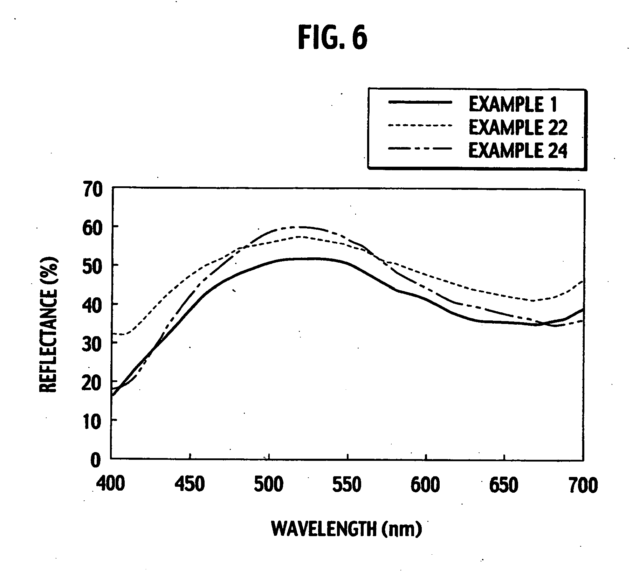

As an example, the spectral reflection spectra obtained for the mirrors of the examples 22 and 24 are shown in FIG. 6. According to FIG. 6, the mirror of the example 24 having a high refractive index has the reflectance on the shorter wavelength side of the point A is approximated to the green mirror of the example 1 as the reference compared with the green laminated film mirror produced in the example 15. Moreover, it is found that the green reflection light is emphasized because the reflectance in the vicinity of the point A is higher than that of the green mirror of the example 1 as the reference of green.

As it is apparent from the explanation above, according to the green mirror of the present invention, reflection of the blue light or yellow to orange light is restrained so that an excellent glare proof property can be ensured with respect to a high output discharge (HID) light source for generating a short wavelength side light or a halogen lamp for generating a long wavelength side light. Moreover, since the photo catalyst activity and the hydrophilic property are provided by the laminated film of the titanium oxide and the silicon oxide, a mirror having the self cleaning property and an excellent visibility without presence of water droplets on the mirror surface even in the case raindrops are dropped on the mirror surface can be provided. Furthermore, according to the green tone of the present invention, since most people like the green color, the effect of providing an excellent design property can also be obtained.

From the description above, it is apparent that many modified embodiments of the present invention can be provided. It is therefore to be understood that within the scope of the appended claims in the present invention may be practiced otherwise than as specifically described.

## Claims

1. A mirror comprising:
a substrate (1);
a metal film (2);
a colored layer (3); and
a laminated film with a titanium oxide layer (4) having a photo catalyst activity performance and a silicon oxide layer (5) having a hydrophilic property; wherein
the spectral reflectance peak wavelength is between 490 to 540 nm,
**characterized in**
**that** the substrate (1) is made of glass, and
**that** the colored layer is formed from a paint including an inorganic pigment of (Co-Ni-Zn-Ti) oxide, a binder and a solvent, wherein the inorganic pigment has a primary particle average particle size of 0.1µm or less.

2. The mirror according to claim 1, **characterized in that**:
the mirror comprises a composite film with the colored layer (3), the titanium oxide layer (4) and the silicon oxide layer (5) laminated successively;

3. The mirror according to claim 1 or 2, **characterized in that** as to the spectral reflection spectrum, the reflectance in the spectral reflectance valley presented in a short wavelength region (390 to 430 nm) is 25 to 55% with respect to the reflectance in the spectral reflectance peak; and the reflectance in the spectral reflectance valley presented in a long wavelength region (650 to 690 nm) is 50 to 75% with respect to the reflectance in the spectral reflectance peak.

4. The mirror according to any of claims 1 to 3, **characterized in that** the film thickness of the titanium oxide layer (4) is 150 to 190nm.

## Patentansprüche

1. Spiegel, der umfasst:
ein Substrat (1);
einen Metallfilm (2);
eine farbige Schicht (3); und
einen laminierten Film mit einer Titanoxidschicht (4), die Fotokatalysatoraktivität entfaltet, sowie einer Siliziumoxidschicht (5), die sich hydrophil verhält; wobei
die Spitzenwellenlänge des spektralen Reflexionsgrades zwischen 490 und 540 nm beträgt,
**dadurch gekennzeichnet, dass**
das Substrat (1) aus Glas besteht, und
die farbige Schicht aus einer Farbe besteht, die ein anorganisches Pigment aus (Co-Ni-Zn-Ti)-Oxid, ein Bindemittel und ein Lösungsmittel enthält, wobei das anorganische Pigment eine durchschnittliche Teilchengröße der Primärteilchen von 0,1 µm oder weniger hat.

2. Spiegel nach Anspruch 1, **dadurch gekennzeichnet, dass**:
der Spiegel einen zusammengesetzten Film umfasst, wobei die farbige Schicht (3), die Titanoxidschicht (4) und die Siliziumoxidschicht (5) aufeinanderfolgend laminiert sind.

3. Spiegel nach Anspruch 1 oder 2, **dadurch gekennzeichnet, dass**, was das Spektrum der spektralen Reflexion angeht, der Reflexionsgrad in dem Tal des spektralen Reflexionsgrades, dargestellt in einem Bereich kurzer Wellenlänge (390 bis 430 nm), 25 bis 55 % des Reflexionsgrades auf der Spitze des spektralen Reflexionsgrades beträgt und der Reflexionsgrad in dem Tal des spektralen Reflexionsgrades, dargestellt in einem Bereich langer Wellenlänge (650 bis 690 nm), 50 bis 75 % des Reflexionsgrades der Spitze des spektralen Reflexionsgrades beträgt.

4. Spiegel nach einem der Ansprüche 1 bis 3, **dadurch gekennzeichnet, dass** die Filmdicke der Titanoxidschicht (4) 150 bis 190 nm beträgt.

## Revendications

1. Miroir comprenant :
un substrat (1) ;
un film métallique (2) ;
une couche colorée (3) ; et
un film stratifié ayant une couche d'oxyde de titane (4) ayant une performance d'activité photocatalytique et une couche d'oxyde de silicium (5) ayant une propriété hydrophile ; dans lequel
la longueur d'onde du pic de réflectance spectrale est de 490 à 540 nm,
**caractérisé en ce que** le substrat (1) est fait de verre, et **en ce que** la couche colorée est formée à partir d'une peinture incluant un pigment inorganique d'oxyde de (Co-Ni-Zn-Ti), un liant et un solvant, dans laquelle le pigment inorganique a une taille moyenne de particule primaire de 0,1 µm ou moins.

2. Miroir selon la revendication 1, **caractérisé en ce que** :
le miroir comprend un film composite ayant la couche colorée (3), la couche d'oxyde de titane (4) et la couche d'oxyde de silicium (5) stratifiées successivement.

3. Miroir selon la revendication 1 ou 2, **caractérisé en ce que**, au sujet du spectre de réflexion spectrale, la réflectance dans la vallée de réflectance spectrale présentée dans une région de longueur d'ondes courte (390 à 430 nm) est de 25 à 55 % par rapport à la réflectance dans le pic de réflectance spectrale ; et la réflectance dans la vallée de réflectance spectrale présentée dans une région de longueur d'ondes longue (650 à 690 nm) est de 50 à 75 % par rapport à la réflectance dans le pic de réflectance spectrale.

4. Miroir selon l'une quelconque des revendications 1 à 3, **caractérisé en ce que** l'épaisseur de film de la couche d'oxyde de titane (4) est de 150 à 190 nm.
